Europäisches Patentamt

European Patent Office

Office européen des brevets

(11) Veröffentlichungsnummer: **0 445 717 A1**

# (12) EUROPÄISCHE PATENTANMELDUNG

(21) Anmeldenummer: 91103282.9

(51) Int. Cl.⁵: **B60D 1/60**

(22) Anmeldetag: 05.03.91

(30) Priorität: 07.03.90 DE 9002631 U

(43) Veröffentlichungstag der Anmeldung:
11.09.91 Patentblatt 91/37

(84) Benannte Vertragsstaaten:
AT BE CH DE ES FR GB IT LI NL

(71) Anmelder: **Grimm, Werner**
**Hans-Diemar-Strasse 91**
**W-7070 Schwäbisch Gmünd(DE)**

(72) Erfinder: **Grimm, Werner**
**Hans-Diemar-Strasse 91**
**W-7070 Schwäbisch Gmünd(DE)**

(74) Vertreter: **Lorenz, Werner, Dipl.-Ing.**
**Fasanenstrasse 7**
**W-7920 Heidenheim(DE)**

(54) Vorrichtung zur Aufnahme einer Schutzkappe.

(57) Eine Vorrichtung zur Aufnahme einer Schutzkappe für den Kugelkopf einer Anhängerkupplung bei Nichtgebrauch, ist mit einen Aufnahmekopf (1) versehen, der direkt oder über ein Verbindungsteil (4) mit einem über ein Teilstück (11) der Anhängerkupplung (9) schiebbaren Spannring (7) versehen ist, dessen Durchmesser über ein Verstellglied (5) veränderbar ist.

Fig.1

Die Erfindung betrifft eine Vorrichtung zur Aufnahme einer Schutzkappe für den Kugelkopf einer Anhängerkupplung bei Nichtgebrauch.

Der Kugelkopf einer Anhängerkupplung eines Kraftfahrzeuges ist im allgemeinen eingefettet, damit beim Anhängebetrieb eine Leichtgängigkeit gegeben ist und Beschädigungen der Anhängerkupplung vermieden werden. Im nichtbenutzten Zustand ist der Kugelkopf der Anhängerkupplung im allgemeinen durch eine Schutzkappe abgedeckt, und zwar zum einen zum Schutz des Kugelkopfes selbst und zum anderen auch um Verschmutzungen an Gegenständen und Personen durch den eingefetteten Kugelkopf zu vermeiden. Soll ein Anhänger an das Zugfahrzeug angehängt werden, so wird die Schutzkappe abgenommen und "irgendwo" aufbewahrt.

Dabei besteht jedoch die Gefahr, daß man später, wenn man die Schutzkappe wieder auf den Kugelkopf aufsetzen möchte, diese nicht mehr findet, weil man sie verlegt hat. Nachteilig ist weiterhin, daß auch die Schutzkappe im allgemeinen fettig bzw. verschmutzt ist, so daß bei einer Ablage der Schutzkappe bei deren Nichtgebrauch ebenfalls die Gefahr von Verschmutzungen von Personen oder Gegenständen besteht.

Der vorliegenden Erfindung liegt daher die Aufgabe zugrunde, eine Vorrichtung zur Aufnahme einer Schutzkappe für den Kugelkopf einer Anhängerkupplung bei Nichtgebrauch zu schaffen, durch die auf einfache Weise sichergestellt ist, daß die Schutzkappe bei Nichtgebrauch gut aufbewahrt ist, andererseits jedoch bei Gebrauch sofort verfügbar ist.

Erfindungsgemäß wird diese Aufgabe gelöst durch einen Aufnahmekopf für die Schutzkappe, der direkt oder über ein Verbindungsteil mit einem über ein Teilstück der Anhängerkupplung schiebbaren Spannring versehen ist, dessen Durchmesser über ein Verstellglied veränderbar ist.

Anstelle einer Ablage der Schutzkappe "irgendwo" im Kofferraum oder in der Garage kann sie nunmehr im Bereich des Kugelkopfes der Anhängerkupplung griffbereit aufbewahrt werden. Vorzugsweise wird man hierfür das Rohr der Anhängerkupplung in dem Bereich zwischen dem Kugelkopf und der Karosserie oder dem Fahrgestell des Fahrzeuges verwenden.

Der in seinem Durchmesser verstellbare Spannring sorgt dabei dafür, daß die Vorrichtung an die unterschiedlichen Formen und Durchmesser von Anhängerkupplungen bzw. deren Rohren angepaßt werden kann, wobei vorzugsweise die Vorrichtung auf dem entsprechenden Teilstück der Anhängerkupplung festgeklemmt wird.

Der Aufnahmekopf kann für eine gute Aufnahme der Schutzkappe kugelförmig oder wenigstens annähernd teilkugelförmig ausgebildet sein.

In einfacher Weise wird man dabei den Spannring in seinem Ausgangsdurchmesser so groß ausbilden, daß er sich über den Kugelkopf der Anhängerkupplung schieben läßt, wonach man den Spannring mit entsprechender Durchmesserreduzierung auf dem dahinter liegenden Rohrstück an einer geeigneten Stelle festklemmt.

Diese Ausgestaltung hat den Vorteil, daß man den Spannring und das Verstellglied zum Spannen entsprechend einfach ausgestalten kann. So kann auf diese Weise der Spannring als einfache Bandschelle ausgebildet sein.

Selbstverständlich ist jedoch auch eine Ausgestaltung möglich, wobei statt einer Bandschelle eine zweiteilige Schelle verwendet wird, die in ihrem Durchmesser entsprechend an das Teilstück angepaßt ist, an dem die Vorrichtung befestigt werden soll. In diesem Fall ist es nicht erforderlich, den Spannring über den Kugelkopf der Anhängerkupplung zu schieben.

In einer vorteilhaften erfindungsgemäßen Ausgestaltung ist vorgesehen, daß unter dem Aufnahmekopf eine Hülse angeordnet ist, aus der auf der Unterseite der Spannring ragt.

Diese Ausgestaltung ist besonders bei Verwendung eines Spannringes als Bandschelle von Vorteil, denn in diesem Falle kann man die Bandschelle beim Spannen entsprechend in den freien Innenraum der Hülse einziehen.

In einer einfachen konstruktiven Ausgestaltung kann hierbei vorgesehen sein, daß zwischen dem Aufnahmekopf und der Hülse ein Boden angeordnet ist, in oder auf den sich das Verstellglied abstützt.

Der Boden übernimmt dabei eine Doppelfunktion, zum einen stellt er den Abschluß des Aufnahmekopfes dar, wobei dieser auch für eine entsprechende Stabilität in Querrichtung der Vorrichtung sorgt, und zum anderen dient er erfindungsgemäß als Abstützglied.

In einer einfachen konstruktiven Ausgestaltung kann dabei vorgesehen sein, daß der Spannring als Bandschelle ausgebildet ist, die durch eine sich an dem Boden abstützende Einstellschraube, die mit ihrem Schraubenschaft durch eine Bohrung in dem Boden geführt ist, spannbar ist.

Durch die Einstellschraube, die in diesem Falle in vorteilhafter Weise mit einer an der Bandschelle angeordneten oder mit dieser verbundenen Mutter zusammenarbeitet, kann die Bandschelle so weit in das Innere der Hülse hineingezogen werden, bis eine entsprechende Spannung bzw. Klemmung der Vorrichtung auf dem gewünschten Teilstück der Anhängerkupplung erreicht wird.

Von Vorteil ist es, wenn vorgesehen ist, daß die Hülse auf der Unterseite auf zwei sich gegenüberliegenden Seiten jeweils eine wenigstens annähernd prismatisch nach innen gerichtete Aussparung aufweist.

Die prismatische Aufnahme ist insbesondere bei einer Befestigung der Vorrichtung auf einem runden Rohrstück der Anhängerkupplung von Vorteil, da in diesem Falle die Hülse einen sichereren Sitz bekommt.

Damit die Durchführung des Spannringes, insbesondere der Bandschelle auf einfache Weise erfolgen kann und die Hülse auch gut auf dem gewünschten Teilstück der Anhängerkupplung sitzen kann, kann weiterhin vorgesehen sein, daß die Hülse auf ihrer Unterseite auf zwei gegenüberliegenden Seiten jeweils mit einer Aussparung für die Bandschelle versehen ist.

Im allgemeinen wird man den Aufnahmekopf und die Hülse einstückig herstellen, wobei selbstverständlich im Rahmen der Erfindung jedoch auch separate Teile möglich sind.

Eine Einstückigkeit läßt sich auf einfache Weise bei einer Ausbildung aus Kunststoff erreichen, dessen Herstellung sehr billig ist.

Statt einer Bandschelle kann gegebenenfalls auch eine Schlauchschelle verwendet werden, die in bekannter Weise in ihrem Durchmesser durch eine Verstelleinrichtung in Form eines verzahnten Schlauchringes und einer damit zusammenarbeitenden Schraubenschnecke erfolgt.

In einer vorteilhaften Weiterbildung der Erfindung kann auch vorgesehen sein, daß die Hülse mit einem Haltegriff für die Schutzkappe versehen ist.

Wenn man noch mehr sicher gehen möchte, daß die Schutzkappe nicht mehr verlegt wird, so kann man an dem Halteglied der Hülse über eine Kette, ein Band, einem elastischen Draht oder dergleichen die Schutzkappe mit der erfindungsgemäßen Vorrichtung lose verbinden. Sind die erfindungsgemäße Vorrichtung und der Kugelkopf der Anhängerkupplung genügend nahe zusammen und ist die Kette, das Band, der Draht oder dergleichen entsprechend lang, so wird durch die Verbindung der Schutzkappe mit der Kette, dem Band, dem Draht oder dergleichen ein Verlorengehen der Schutzkappe vermieden. In einem derartigen Falle läßt sich nämlich die Schutzkappe auf einfache Weise entsprechend von dem Kugelkopf der Anhängerkupplung auf den Aufnahmekopf der erfindungsgemäßen Vorrichtung umsetzen und umgekehrt. Hierzu ist lediglich dafür zu sorgen, daß ein entsprechendes Spiel bzw. eine ausreichende Länge der Kette, des Bandes, des Drahtes oder dergleichen vorhanden ist.

Nachfolgend ist ein Ausführungsbeispiel der Erfindung anhand der Zeichnung prinzipmäßig dargestellt.

Es zeigt:

Fig. 1 eine Seitenansicht der erfindungsgemäßen Vorrichtung auf einer Anhängerkupplung montiert;

Fig. 2 einen Schnitt nach der Linie II-II der Fig. 1 (ohne die Anhängerkupplung);

Fig. 3 einen Schnitt entsprechend dem nach der Fig. 2 mit der erfindungsgemäßen Vorrichtung im auf die Anhängerkupplung geklemmten Zustand;

Fig. 4 eine Ansicht der erfindungsgemäßen Vorrichtung von unten.

Die erfindungsgemäße Vorrichtung weist einen teilkugelförmigen Aufnahmekopf 1 auf, der auf der Oberseite offen ist, und der auf der Unterseite durch einen Boden 2 geschlossen ist, der mit einer zentralen Bohrung 3 versehen ist. An den Aufnahmekopf 1 schließt sich unterseitig an den Boden 2 eine Hülse 4 an. Die Hülse 4 bildet einen auf der Unterseite offenen Schacht nach unten mit einem freien Innenraum.

Durch die zentrale Bohrung 3 ist eine Einstellschraube 5 gesteckt, wobei deren Schraubenkopf 6 auf der Oberseite des Bodens 2 aufliegt. Die Schraube 5 besitzt eine derartige Länge, daß sie ungefähr im Bereich des unteren Endes der Hülse 4 endet.

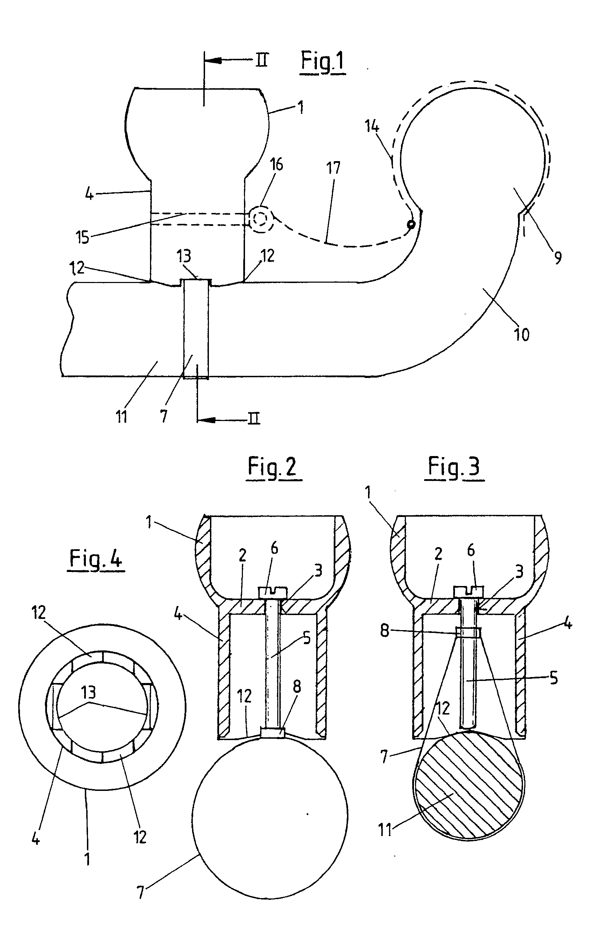

Eine Bandschelle 7 als Spannring ist mit einer Mutter 8 versehen, die z.B. durch ein Verlöten oder Verschweißen fest mit der Bandschelle 7 verbunden ist. Die Mutter 8 ist auf den Gewindeabschnitt der Einstellschraube 5 aufgeschraubt, wobei sich in der Ausgangsposition, in der die Bandschelle 7 ihren größten Durchmesser bzw. größten Umfang besitzt, sich am unteren Ende befindet. Der Durchmesser der Bandschelle 7 ist dabei so groß gewählt, daß sich die Bandschelle und damit auch die Hülse 4 mit dem Aufnahmekopf 1 über den Kugelkopf 9 einer Anhängerkupplung 10 aufschieben läßt (siehe Fig. 1). Die Vorrichtung wird dabei - in Abhängigkeit von den vorhandenen Platzverhältnissen - hinter dem Kugelkopf 9 z.B. an einem horizontalen Rohrstück 11 der Anhängerkupplung 10 befestigt. Zur Befestigung wird durch einen Schraubenzieher, der durch die obere Öffnung des Aufnahmekopfes 1 gesteckt wird, bei entsprechender Drehrichtung die Mutter 8 in den Innenraum der Hülse 4 hingeschraubt, wodurch auch die darin befestigte Bandschelle wenigstens teilweise nach innen gezogen wird. Auf diese Weise verliert die Bandschelle 7 ihre kreisrunde Form und erhält eine Tropfenform (siehe Fig. 3). Gleichzeitig reduziert sie sich damit im Bereich des Rohrstückes 11 in ihrem Durchmesser bzw. in ihrem Umfangsverlauf, wodurch die Vorrichtung auf dem Rohrstück 11 aufgeklemmt wird.

Das Rohrstück 11 kann dabei von beliebiger Form sein, denn mit der erfindungsgemäßen Vorrichtung lassen sich sowohl runde, ovale, als auch eckige Rohrstücke umfassen.

Die in der Fig. 1 dargestellte Lage der Vorrichtung ist ebenfalls nur beispielsweise genannt. Selbstverständlich kann auch eine andere Umfangslage z.B. seitlich oder nach unten, gewählt werden, wenn hierfür die vorhandenen Platzverhältnisse besser sind.

Damit die Hülse 4 einen festeren Sitz auf dem Rohrstück 11 erhält, ist sie auf der Unterseite auf zwei gegenüberliegenden Seiten, die sich in Längsrichtung des Rohrstückes 11 erstrecken, mit einer nach innen bzw. zum Aufnahmekopf 1 gerichteten prismatischen Aussparung 12 versehen. Auf diese Weise erhält man eine flächenförmige Auflage der Hülse 4 mit ihrer Unterseite auf dem Rohrstück 11.

Damit die Bandschelle 7 beim Aufsetzen der Hülse 4 auf das Rohrstück 11 nicht stört, ist die Hülse auf der Unterseite zusätzlich noch mit zwei sich gegenüberliegenden rechteckigen Aussparungen 13 versehen. Die Aussparungen 13 besitzen eine derartige Breite und Tiefe, daß die Bandschelle in der entstandenen Aussparung aufgenommen wird. Dies bedeutet, sie besitzt wenigstens eine Tiefe, die der Dicke der Bandschelle entspricht und eine Breite, die wenigstens der Breite der Bandschelle entspricht. Wie ersichtlich, sind die Aussparungen 13 quer zur Längsachse des Rohrstückes 11 und damit um 90° versetzt zu den prismatischen Aussparungen 12 angeordnet.

Wenn man ein Verlieren einer Schutzkappe 14, die in der Fig. 1 gestrichelt dargestellt ist, sicher vermeiden möchte, so kann man z.B. über die Hülse 4 einen Ring oder ein Band 15 legen, das z.B. mit einer Öse 16 versehen ist. Selbstverständlich ist es auch möglich, die Hülse 4 direkt mit einer Öse 16 oder einem anderen Befestigungsmittel zu versehen. Befestigt man nun in der Öse 16 eine Kette, ein Band, einen elastischen Draht 17 oder dergleichen und verbindet das andere Ende auf beliebige Weise mit der Schutzkappe 14 (gestrichelte Darstellung in der Fig. 1), so kann die Schutzkappe 14 nicht mehr verloren gehen, denn sie hängt fest an der Kette, dem Band, dem elastischen Draht 17 oder dergleichen und kann nur jeweils von dem Kugelkopf 9 auf den Aufnahmekopf 1 oder umgekehrt umgesetzt werden.

**Patentansprüche**

1. Vorrichtung zur Aufnahme einer Schutzkappe für den Kugelkopf einer Anhängerkupplung bei Nichtgebrauch, **gekennzeichnet durch** einen Aufnahmekopf (1), der direkt oder über ein Verbindungsteil (4) mit einem über ein Teilstück (11) der Anhängerkupplung (9) schiebbaren Spannring (7) versehen ist, dessen Durchmesser über ein Verstellglied (5) veränderbar ist.

2. Vorrichtung nach Anspruch 1, **dadurch gekennzeichnet, daß** der Aufnahmekopf (1) wenigstens annähernd kugel- oder teilkugelförmig ausgebildet ist.

3. Vorrichtung nach Anspruch 1 oder 2, **dadurch gekennzeichnet, daß** unter dem Aufnahmekopf (1) eine Hülse (4) angeordnet ist, aus der auf der Unterseite der Spannring (7) ragt.

4. Vorrichtung nach Anspruch 3, **dadurch gekennzeichnet, daß** zwischen dem Aufnahmekopf (1) und der Hülse (4) ein Boden (2) angeordnet ist, in dem oder auf dem sich das Verstellglied (3) abstützt.

5. Vorrichtung nach Anspruch 4, **dadurch gekennzeichnet, daß** der Spannring als Bandschelle (7) ausgebildet ist, die durch eine sich an dem Boden (2) abstützende Einstellschraube (5), die mit ihrem Schraubenschaft durch eine Bohrung (3) in dem Boden (2) geführt ist, spannbar ist.

6. Vorrichtung nach Anspruch 5, **dadurch gekennzeichnet, daß** die Einstellschraube (5) sich mit dem Schraubenkopf (6) auf dem Boden (2) abstützt, und daß die Bandschelle (7) mit einer Mutter (8) versehen ist, in die Einstellschraube (5) mit ihrem Gewindeabschnitt einschraubbar ist.

7. Vorrichtung nach einem der Ansprüche 2 bis 6, **dadurch gekennzeichnet, daß** die Hülse (4) auf der Unterseite auf zwei sich gegenüberliegenden Seiten jeweils eine wenigstens annähernd prismatisch nach innen bzw. zum Aufnahmekopf (1) gerichtete Aussparung (12) aufweist.

8. Vorrichtung nach einem der Ansprüche 2 bis 7, **dadurch gekennzeichnet, daß** die Hülse (4) auf der Unterseite auf zwei gegenüberliegenden Seiten jeweils eine Aussparung (13) für die Durchführung des Spannringes bzw. der Bandschelle (7) aufweist.

9. Vorrichtung nach einem der Ansprüche 2 bis 8, **dadurch gekennzeichnet, daß** der Aufnahmekopf (1) und die Hülse (4) einstückig sind.

10. Vorrichtung nach Anspruch 1,

**dadurch gekennzeichnet,** daß
der Spannring als Schlauch- oder Spannschelle ausgebildet ist.

11. Vorrichtung nach einem der Ansprüche 2 bis 10,
**dadurch gekennzeichnet,** daß
die Hülse (4) mit einem Haltegriff (16) für die Schutzkappe (14) versehen ist.

Fig.1

Fig.2

Fig.3

Fig.4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-U-8 702 644   (ZIMMERMANN)<br>* Ansprüche 1,4; Figuren 1,2 *<br>— — — | 1,10-11 | B 60 D 1/60 |
| X | DE-U-8 518 027   (ROEMPKE)<br>* Seite 3, Abschnitt 3; Figuren 4-7 * | 1,10-11 | |
| A | | 5 | |
| | — — — | | |
| A | DE-U-8 619 683   (RAMFFT)<br>* Seite 6, Abschnitt 2,3; Figuren 1-3 *<br>— — — | 1,10-11 | |
| A | EP-A-0 274 160   (STIDSEN)<br>* Spalte 3, Zeilen 2-14; Figuren 3,6 *<br>— — — — — | 1 | |

|  |
|---|
| **RECHERCHIERTE SACHGEBIETE (Int. Cl.5)**<br><br>B 60 D |

**Der vorliegende Recherchenbericht wurde für alle Patentansprüche erstellt**

| Recherchenort | Abschlußdatum der Recherche | Prüfer |
|---|---|---|
| Den Haag | 06 Juni 91 | GONZALEZ GRANDA C. |